# EUROPEAN PATENT APPLICATION

(11) **EP 3 190 487 A1**
(43) Date of publication of application: **12.07.2017**
(21) Application number: 15837654.1
(22) Date of filing: 04.09.2015
(51) Int. Cl.: G06F 3/041

(54) **TOUCH SCREEN AND MANUFACTURING METHOD THEREFOR**

(30) Priority: 04.09.2014 KR 20140117913
(71) Applicant: LG Chem, Ltd., Seoul 07336 (KR)
(72) Inventor: LEE, Donghyun, Daejeon 34122 (KR); LEE, Seung Heon, Daejeon 34122 (KR); HWANG, Ji Young, Daejeon 34122 (KR); PARK, Wonchan, Daejeon 34122 (KR); SEO, Han Min, Daejeon 34122 (KR)
(74) Representative: Goddar, Heinz J.
(86) International application number: PCT/KR2015/009365
(87) International publication number: WO 2016/036199

(57) **Abstract**

The present application relates to a touch screen and a method of manufacturing the same. A touch screen according to an exemplary embodiment of the present application includes: a driving electrode unit including a driving electrode pattern (Tx pattern) provided on a first substrate; and a sensing electrode unit including a sensing electrode pattern (Rx pattern) provided on a second substrate, in which the driving electrode pattern and the sensing electrode pattern include a conductive metal line, and a pitch of the driving electrode pattern is smaller than a pitch of the sensing electrode pattern.

## Description

### [Technical Field]

This application claims priority from Korean Patent Application No. 10-2014-0117913, filed September 4, 2014 at the KIPO, the disclosure of which is incorporated herein by reference in its entirety.

The present invention relates to a touch screen and a method of manufacturing the same.

### [Background Art]

In general, a display device refers to monitors for a TV or a computer as a whole, and includes a display diode forming an image and a case supporting the display diode.

Examples of the display device may include a plasma display panel (PDP), a liquid crystal display (LCD), an electrophoretic display, and a cathode-ray tube (CRT). The display device may include an RGB pixel pattern and an additional optical filter for implementing an image.

The optical filter may include at least one of a reflection prevention film preventing the external light that is incident from the outside from being reflected to the outside, a near IR shield film shielding the near IR generated in the display device in order to prevent mis-operation of electronic devices such as remote controllers, a color correction film increasing the color purity by controlling a color tone by including a color control dye, and an electromagnetic wave shield film that shields the electromagnetic wave generated in a display device when a display apparatus is driven. Here, the electromagnetic wave shield film includes a transparent board and a metal mesh pattern provided on the board.

Meanwhile, with regard to the display apparatus, as the spread of IPTVs is accelerated, a demand for a touch function that uses hands as a direct input apparatus without a separate input apparatus such as remote controllers is growing. Further, a multi-touch function that is capable of recognizing a specific point and writing is also required.

The touch screen that performs the aforementioned function may be classified into the following types according to a signal detection manner.

That is, the touch screen includes a resistive type of sensing a position which is pressed down by pressure through a change in current or voltage value while a direct current voltage is applied thereto, a capacitive type of using a capacitance coupling while an alternating current voltage is applied thereto, an electromagnetic type of sensing a selected position by a change in voltage while a magnetic field is applied thereto, and the like.

Among them, the resistive type and capacitive type touch screen, which are most extensively spread, recognize the touch by a change in electric contact or capacitance by using a transparent conductive film such as the ITO film. However, since the transparent conductive film has high resistance of 100 ohms/square or more, sensitivity is degraded when the display device is manufactured in a large scale, and as the size of screen is increased, the cost of the ITO film is rapidly increased, so that it is not easy to commercialize the touch screen. In order to overcome this, there is an effort to implement a large touch screen by using a metal pattern having high conductivity.

### [Detailed Description of the Invention]

### [Technical Problem]

The present application is provided to solve a malfunction problem of a touch screen, which is generated by noise or a contact phenomenon by pressure of a touch generated in a rear surface of the touch screen when the touch screen is driven by using a metal mesh pattern.

### [Technical Solution]

An exemplary embodiment of the present application provides a touch screen, including: a driving electrode unit including a driving electrode pattern (Tx pattern) provided on a first substrate; and a sensing electrode unit including a sensing electrode pattern (Rx pattern) provided on a second substrate, in which the driving electrode pattern and the sensing electrode pattern include a conductive metal line, and a pitch of the driving electrode pattern is smaller than a pitch of the sensing electrode pattern.

Another exemplary embodiment of the present application provides a display device including the touch screen.

### [Advantageous Effects]

According to the exemplary embodiment of the present application, when the driving electrode pattern and the sensing electrode pattern of the touch screen include a conductive metal line, it is possible to decrease touch sensing of a lower surface of the driving electrode unit, in which the driving electrode pattern is provided, that is, a rear surface of the touch screen, by adjusting the pitches of the driving electrode pattern and the sensing electrode pattern. Accordingly, it is possible to solve a problem in that a malfunction is generated due to noise or a contact by pressure from the rear surface of the touch screen.

### [Brief Description of Drawings]

FIG. 1 is a view schematically illustrating a cross-sectional structure of a touch screen according to an exemplary embodiment of the present application.
FIGS. 2 and 3 are diagrams representing an electric field driving characteristic result for a touch of a rear surface of the touch screen according to the exemplary embodiment of the present application.
FIGS. 4 and 5 are diagrams schematically illustrating forms of a driving electrode pattern and a sensing electrode pattern of the touch screen according to the exemplary embodiment of the present application.

### [Best Mode]

Hereinafter, the present application will be described in detail.

In a touch screen of a capacitive type using an ITO film in the related art, an area of an opening of a driving electrode part adjacent to a rear surface of the touch screen is relatively small, so that it is possible to suppress an electric field generated to the rear surface from being formed. However, the touch screen in the capacitive type using a conductive metal line, such as a metal mesh pattern, has an opening of 80% or more, so that an electric field may be formed in a rear surface of the touch screen through the opening, and a malfunction may be generated by noise or touch sensing due to pressure from the rear surface of the touch screen.

In this respect, the present application aims to solve a touch malfunction defect, which is generable through an opening, in a touch screen of a capacitive type using a conductive metal line, and more particularly, to suppress a malfunction phenomenon for touch sensing in a rear surface of the touch screen by suppressing an electric field from being formed for the touch sensing in the rear surface of the touch screen.

A touch screen according to an exemplary embodiment of the present application includes: a driving electrode unit including a driving electrode pattern (a Tx pattern) provided on a first substrate; and a sensing electrode unit including a sensing electrode pattern (a Rx pattern) provided on a second substrate, and the driving electrode pattern and the sensing electrode pattern include conductive metal lines, and a pitch of the driving electrode pattern is smaller than a pitch of the sensing electrode pattern.

The present application aims to suppress an electric field from being formed on a lower surface of the driving electrode unit, that is, a rear surface of the touch screen, by adjusting the pitches of the driving electrode pattern and the sensing electrode pattern.

The driving electrode pattern may serve to drive a voltage, and the sensing electrode pattern may serve to receive a signal of a mutual cap and transfer the received signal to a circuit, and the driving electrode pattern and the sensing electrode pattern are spatially separated from each other.

In the exemplary embodiment of the present application, a pitch of the sensing electrode pattern may be 100 to 400 µm, but is not limited thereto. Further, the pitch of the driving electrode pattern may be 100 to 400 µm, but is not limited thereto.

In the exemplary embodiment of the present application, a variation of charges per unit area of the sensing electrode unit for the touch sensing in the lower surface of the driving electrode unit may be 40% or less, may be 20% or less, may be 10% or less, and may be 5% or less. In this case, a voltage applied to the sensing electrode unit may be lower than a voltage applied to the driving electrode unit.

In the present application, the variation of charges per unit area of the sensing electrode unit for the touch sensing in the lower surface of the driving electrode unit is defined with a ratio of the amount of charges per unit area of the sensing electrode unit when a touch is input into the lower surface of the driving electrode unit based on the amount of charges per unit area of the sensing electrode unit when a touch is not input into the lower surface of the driving electrode unit.

More particularly, in the cases where an ITO is used as the driving electrode pattern and the sensing electrode pattern of the touch screen, and the metal mesh pattern is used as the driving electrode pattern and the sensing electrode pattern of the touch screen, the variation of charges for the touch sensing of the lower surface of the driving electrode unit was simulated, and a result of the simulation is represented in Table 1 below. In this case, in the case where the metal mesh pattern is used, a pitch of the driving electrode pattern is 240 µm, a pitch of the sensing electrode pattern is 240 µm, and a line width of each of the driving electrode pattern and the sensing electrode pattern is 3 µm.

**[Table 1]**

| | | Metal mesh pattern | | ITO | |
|---|---|---|---|---|---|
| | | Charges per unit area (nC/m²) | Variation of charges (%) | Charges per unit area (nC/m²) | Variation of charges (%) |
| Sensing electrode unit (1.7 V) | No touch | 34.0 | - | 65.9 | - |
| | Touch of upper surface | 24.8 | -27.0 | 57.8 | -12.3 |
| | Touch of rear surface | 28.2 | -17.2 | 65.5 | -0.5 |
| Driving | No touch | 34.1 | - | 67.4 | - |
| electrode unit (3.3 V) | Touch of upper surface | 69.1 | 102.3 | 80.3 | 19.0 |
| | Touch of rear surface | 80.3 | 135.2 | 95.5 | 41.6 |

As can be seen in the result of Table 1, in the case of the metal mesh pattern, of which a pitch of the driving electrode pattern is 240 µm, the variation of charges per unit area of the sensing electrode unit when an upper surface is touched is 34.0 nC/m² to 24.8 nC/m², and the variation of charges for the touch of the upper surface is 27%, and compared to the variation of charges of 12.3% when the ITO is used, the case of the metal mesh pattern exhibits the larger variation of charges.

However, the biggest difference between the metal mesh pattern and the ITO is in the touch of the rear surface, and the variation of charges per unit area of the sensing electrode unit when the rear surface is touched is 34.0 nC/m² to 28.2 nC/m², and the variation of charges for the touch of the rear surface is 17.2%, which represents the variation of charges of 30 times or more of the variation of charges of the ITO that is 0.5%. Accordingly, in the metal mesh pattern, it may be considered that the electric field formed through the opening existing in the screen unit passes through the rear surface to cause the touch of the rear surface.

Further, in the present application, the metal mesh pattern was used as the driving electrode pattern and the sensing electrode pattern of the touch screen, a pitch of the sensing electrode pattern was fixed with 240 µm, and the variation of charges for the touch sensing of the lower surface of the driving electrode unit was simulated while changing the pitch of the driving electrode pattern. The result is represented in Table 2 below. In this case, a line width of each of the driving electrode pattern and the sensing electrode pattern is 3 µm.

**[Table 2]**

| Pitch of driving electrode pattern | Measure quantity of charges | Sensing electrdoe unit | | |
|---|---|---|---|---|
| | | No touch | Touch of upper surface | Touch of rear surface |
| 120 µm | Charges per unit area (nC/m²) | 39.7 | 31.9 | 36.4 |
| | Variation of charges (%) | - | -19.6 | -8.3 |
| 160 µm | Charges per unit area (nC/m²) | 37.7 | 29.4 | 33.4 |
| | Variation of charges (%) | - | -22.0 | -11.3 |
| 240 µm | Charges per unit area (nC/m²) | 34.0 | 24.8 | 28.2 |
| | Variation of charges (%) | - | -27.0 | -17.2 |
| 480 µm | Charges per unit area (nC/m²) | 27.1 | 16.0 | 18.0 |
| | Variation of charges (%) | - | -41.0 | -33.5 |

As represented in the result of Table 2, the variation of charges in the rear surface of the touch screen is changed according to the pitch of the driving electrode pattern in the state where the pitch of the sensing electrode pattern is fixed with 240 µm, and more particularly, when the pitch of the driving electrode pattern is 120 µm, the variation of charges is 8.3%, when the pitch of the driving electrode pattern is 160 µm, the variation of charges is 11.3%, when the pitch of the driving electrode pattern is 240 µm, the variation of charges is 17.2%, and when the pitch of the driving electrode pattern is 480 µm, the variation of charges is 33.5%. Accordingly, it can be seen that in the case where the driving electrode pattern has a relatively narrower pitch than the pitch of the sensing electrode pattern, the passing of the charges through the rear surface of the touch screen is restricted, so that the variation of charges is decreased.

In the exemplary embodiment of the present application, an optically clear adhesive (OCA) film may be additionally included between the driving electrode unit and the sensing electrode unit. The OCA film may use a material known in the art.

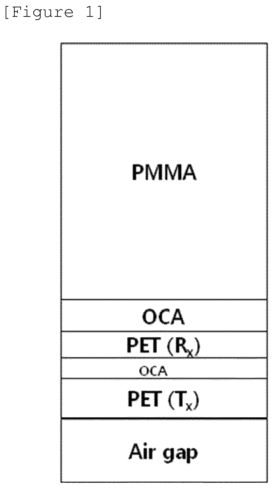

A cross-sectional structure of the touch screen according to the exemplary embodiment of the present application is schematically illustrated in FIG. 1.

In the exemplary embodiment of the present application, each of the driving electrode pattern and the sensing electrode pattern may be an independently regular pattern, and may also be an irregular pattern.

As the regular pattern, a pattern form, such as a mesh pattern, known in the art may be used. The mesh pattern may include a regular polygonal pattern including one or more shapes of a triangle, a quadrangle, a pentagon, a hexagon, and an octagon.

In the exemplary embodiment of the present application, the driving electrode pattern and the sensing electrode pattern are regular patterns and include cross points formed by crossing a plurality of predetermined lines among the lines constituting the patterns, and in this case, the number of cross points may be 3,000 to 122,500, may be 13,611 to 30,625, and may be 19,600 to 30,625 in an area of 3.5 cm × 3.5 cm. Further, according to the present application, it is confirmed that when the pattern is provided in the display, the optical property of the display is not largely spoiled in the case where the number of cross points is 4,000 to 123,000.

Further, according to the exemplary embodiment of the present application, the driving electrode pattern and the sensing electrode pattern are the irregular patterns and include cross points formed by crossing a plurality of predetermined lines among the lines constituting the patterns, and in this case, the number of cross points may be 6,000 to 245,000, may be 3,000 to 122,500, may be 13,611 to 30,625, and may be 19,600 to 30,625 in an area of 3.5 cm × 3.5 cm. Further, according to the present application, it is confirmed that when the pattern is provided in the display, the optical property of the display is not largely spoiled in the case where the number of cross points is 4,000 to 123,000.

A material having specific resistance of 1 × 10⁶ to 30 × 10⁶ ohm·cm is appropriate as the material of the driving electrode pattern and the sensing electrode pattern used in the present application, and a material having specific resistance of 7 × 10⁶ ohm·cm or less is more preferable.

In the exemplary embodiment of the present application, the materials of the driving electrode pattern and the sensing electrode pattern are not particularly limited, but may include one or more selected from the group consisting of a metal, a metal oxide, a metal nitride, a metal oxynitride, and a metal alloy. The materials of the driving electrode pattern and the sensing electrode pattern may be a material which has excellent conductivity and is easily etched.

Particular examples of the material of the driving electrode pattern and the sensing electrode pattern may include a single layer or a multi-layer including gold, silver, aluminum, copper, neodymium, molybdenum, nickel, or an alloy thereof. Herein, the thicknesses of the driving electrode pattern and the sensing electrode pattern are not particularly limited, but may be 0.01 to 10 µm in terms of the conductivity of the conductive pattern and the economic efficiency of the forming process thereof.

In the exemplary embodiment of the present application, the line width of each of the driving electrode pattern and the sensing electrode pattern may be 10 µm or less, may be 7 µm or less, may be 5 µm or less, may be 4 µm or less, may be 2 µm or less, and may be 0.1 µm or more. More particularly, the line width of each of the driving electrode pattern and the sensing electrode pattern may be 0.1 to 1 µm, 1 to 2 µm, 2 to 4 µm, 4 to 5 µm, 5 to 7 µm or the like, but is not limited thereto.

Further, the line width of each of the driving electrode pattern and the sensing electrode pattern may be 10 µm or less and the thickness thereof may be 10 µm or less, the line width of each of the driving electrode pattern and the sensing electrode pattern may be 7 µm or less and the thickness thereof may be 1 µm or less, or the line width of each of the driving electrode pattern and the sensing electrode pattern may be 5 µm or less and the thickness thereof may be 0.5 µm or less.

More particularly, in the present application, the line width of each of the driving electrode pattern and the sensing electrode pattern may be 10 µm or less, and in the driving electrode pattern and the sensing electrode pattern, the number of vertexes of the closed figures within the area of 3.5 cm × 3.5 cm may be 6,000 to 245,000. Further, the driving electrode pattern and the sensing electrode pattern may have a line width of 7 µm or less, and the number of vertices of closed figures may be from 7,000 to 62,000 in an area of 3.5 cm × 3.5 cm of the conductive pattern. Further, the driving electrode pattern and the sensing electrode pattern may have a line width of 5 µm or less, and the number of vertices of closed figures may be from 15,000 to 62,000 in an area of 3.5 cm × 3.5 cm of the driving electrode pattern and the sensing electrode pattern.

An opening ratio of each of the driving electrode pattern and the sensing electrode pattern, that is, the ratio of the area, which is not covered by the patterns, may be 70% or more, may be 85% or more, and may be 95% or more. Furthermore, the aperture ratio of the driving electrode pattern and the sensing electrode pattern may be from 90% to 99.9%, but is not limited thereto.

According to the exemplary embodiment of the present application, a printing method is used for forming the driving electrode pattern and the sensing electrode pattern, so that it is possible to form the driving electrode pattern and the sensing electrode pattern, which have a small line width and are precise, on a transparent substrate. The printing method may be performed by using a method, in which a paste or ink including a conductive pattern material is transferred on the transparent substrate in a desired pattern form and then is sintered. The printing method is not particularly limited, and a printing method such as offset printing, screen printing, gravure printing, flexo printing, inkjet printing, and nano imprint may be used, and one or more complex methods among the methods may be used. The printing method may adopt a roll to roll method, a roll to plate method, a plate to roll method, or a plate to plate method.

In the present application, a reverse offset printing method may be applied in order to implement the precise conductive pattern. To this end, in the present application, a method, in which ink that may serve as a resist during etching is applied onto an entire surface of silicon-based rubber that is called a blanket, an unnecessary portion is removed by using an intaglio on which a pattern called a first cliché is formed, a printing pattern left on the blanket is secondly transferred on a film or a substrate, such as glass, on which metal and the like are deposited, and a desired pattern is formed through sintering and etching processes, may be performed. In the case where the aforementioned method is used, there is an advantage in that resistance in a thickness direction may be uniformly maintained because the substrate, on which metal is deposited, is used and thus uniformity of line heights is ensured over the entire region. In addition to this, the present application may include a direct printing method, in which conductive ink, such as Ag ink, is directly printed by using the aforementioned reverse offset printing method and then is sintered to form a desired pattern. In this case, the line height of the pattern may be made uniform by printing pressure, and conductivity may be provided by a heat sintering process aiming the connection of Ag nanoparticles by inter-surface fusion, a microwave sintering process/a laser partial sintering process, or the like.

In the exemplary embodiment of the present application, each of the driving electrode pattern and the sensing electrode pattern may independently and additionally include a darkening layer provided in a region corresponding to the driving electrode pattern and the sensing electrode pattern.

In the exemplary embodiment of the present application, the darkening layer may be provided to upper surfaces and/or lower surfaces of the driving electrode pattern and the sensing electrode pattern, and may be provided on at least a part of the lateral surfaces of the driving electrode pattern and the sensing electrode pattern, as well as the upper surfaces and the lower surfaces of the driving electrode pattern and the sensing electrode pattern, and may be provided on the upper surfaces, the lower surfaces, and the entire lateral surfaces of the driving electrode pattern and the sensing electrode pattern.

In the exemplary embodiment of the present application, the darkening layer is provided over the entire surfaces of the driving electrode pattern and the sensing electrode pattern, thereby decreasing visibility according to high reflectance of the driving electrode pattern and the sensing electrode pattern. In this case, when the darkening layer is bonded to a layer having high reflectance, such as a conducting layer, the darkening layer has destructive interference and self-light absorbance under a specific thickness condition, so that there is exhibited an effect of reducing the reflectance by the driving electrode pattern and the sensing electrode pattern by adjusting quantities of light reflected by the darkening layer and light reflected by the driving electrode pattern and the sensing electrode pattern through the darkening layer and to be similar to each other, at the same time, inducing mutual destructive interference between two elements of light under the specific thickness condition.

In the exemplary embodiment of the present application, the darkening layer may be simultaneously or separately patterned with or from the driving electrode pattern and the sensing electrode pattern, but a layer for forming each pattern may be separately formed. However, in order for the driving electrode pattern and the sensing electrode pattern and the darkening layer to be present on the accurately corresponding surface, the driving electrode pattern and the sensing electrode pattern and the darkening layer may be simultaneously formed.

In the exemplary embodiment of the present application, the darkening layer and the driving electrode pattern and the sensing electrode pattern form a structure, in which separate pattern layers are laminated, so that the structure is differentiated from a structure, in which at least a part of a light absorption material is recessed or dispersed in the driving electrode pattern and the sensing electrode patter, or a structure, in which a part of a surface is physically or chemically deformed by performing surface treatment on a conducting layer of a single layer.

Further, in the exemplary embodiment of the present application, the darkening layer is directly provided on the substrate or the driving electrode pattern and the sensing electrode pattern without an attachment layer or adhesive layer being interposed therebetween. The attachment layer or adhesive layer may affect durability or optical properties. Further, a method for manufacturing the laminated structure included in the touch screen according to the exemplary embodiment of the present application is totally different from that of the case where the attachment layer or adhesive layer is used. Moreover, in the exemplary embodiment of the present application, an interface property between the substrate or the driving electrode pattern and the sensing electrode pattern and the darkening layer is excellent as compared to the case where the attachment layer or adhesive layer is used.

The darkening layer may be formed of a single layer, or a plurality of layers including two or more layers.

The darkening layer may have a color that is close to an achromatic color. However, the color is not essentially necessary to be the achromatic color, and may be introduced as long as reflectance is low even though the darkening layer has a color. In this case, the achromatic color means a color exhibited when light that is incident on a surface of an object is not selectively absorbed but evenly reflected and absorbed with respect to a wavelength of each component. In the present application, the darkening layer may use a material having a standard deviation of total reflectance for each wavelength band of 50% or less in a visible ray region (400 nm to 800 nm) when the total reflectance is measured.

The material of the darkening layer is a light absorbing material, and preferably may be used without a particular limitation as long as the material is made of a metal, a metal oxide, a metal nitride, or a metal oxynitride having the aforementioned physical properties when the entire surface layer is formed.

For example, the darkening layer may be an oxide film, a nitride film, an oxynitride film, a carbide film, a metal film, or a combination thereof formed by using Ni, Mo, Ti, Cr, and the like under a deposition condition set by those skilled in the art.

In the exemplary embodiment of the present application, the darkening layer is provided in the regions corresponding to the driving electrode pattern and the sensing electrode pattern. Here, the regions corresponding to the driving electrode pattern and the sensing electrode pattern mean that the regions have the patterns having the same shapes as those of the driving electrode pattern and the sensing electrode pattern. However, the size of the darkening layer does not need to be completely identical to the driving electrode pattern and the sensing electrode pattern, and the case where the line width of the darkening layer is larger or smaller than the line widths of the driving electrode pattern and the sensing electrode pattern is included in the scope of the present application. For example, it is preferable that the darkening layer has an area of 80% to 120% of an area in which the driving electrode pattern and the sensing electrode pattern are provided.

The darkening layer may have a pattern form having the same line width as or the larger line width than those of the driving electrode pattern and the sensing electrode pattern.

### [Mode for carrying out the invention]

Hereinafter, the present invention will be described in more detail through the following Examples, but the Examples are simply illustrative, and the scope of the present invention is not limited by the Examples.

### <Example>

In the case where the ITO is used as the driving electrode pattern and the sensing electrode pattern of the touch screen and the case where the metal mesh pattern is used as the driving electrode pattern and the sensing electrode pattern of the touch screen, an evaluation of a characteristic for a touch of the rear surface of the touch screen by pressure of the upper surface of the touch screen was conducted. The result is represented in Table 3 below. In this case, in the case where the metal mesh pattern is used, a pitch of the driving electrode pattern is 240 µm, a pitch of the sensing electrode pattern is changed as represented in Table 3 below, and a line width of each of the driving electrode pattern and the sensing electrode pattern is 3 µm. Further, the driving electrode pattern and the sensing electrode pattern were formed on a polyethylene terephthalate substrate in a structure of Al/AlOxNy (100 nm/60 nm) by a reverse offset printing method.

**[Table 3]**

| | 150 g | 250 g | 350 g | 450 g | 550 g | 650 g | 1,000 g |
|---|---|---|---|---|---|---|---|
| ITO | OK | OK | OK | OK | OK | NG | NG |
| 240 µm | OK | OK | NG | NG | NG | NG | NG |
| 170 µm | OK | OK | OK | NG | NG | NG | NG |
| 130 µm | OK | OK | OK | OK | OK | NG | NG |

As represented in the result of Table 3, in the general ITO-based touch screen, NG by the touch of the rear surface was generated at 650 g, which may be recognized as a contact phenomenon by a bending phenomenon of the substrate for pressure of a PMMA cover window. Further, in the case of the metal mesh pattern is used, a defect was generated regardless of the pitch of the sensing electrode pattern by the bending phenomenon of the cover window at 550 g or more. Here, the important point is that in the case of the metal mesh pattern, whether the touch of the rear surface is generated may be determined at different pressures according to the pitch of the sensing electrode pattern, and particularly, it can be seen that the touch of the rear surface is not generated at up to 250 g when the pitch of the sensing electrode pattern is 240 µm, at up to 350 g when the pitch of the sensing electrode pattern is 170 µm, and at up to 550 g when the pitch of the sensing electrode pattern is 130 µm.

The actual result is similar to the previous simulation result, and it can be seen that the pitch of the driving electrode pattern is relatively smaller than the pitch of the sensing electrode pattern, so that it is possible to suppress an electric field to the rear surface of the touch screen from being formed, and thus it is possible to manufacture the touch screen advantageous to the touch of the rear surface.

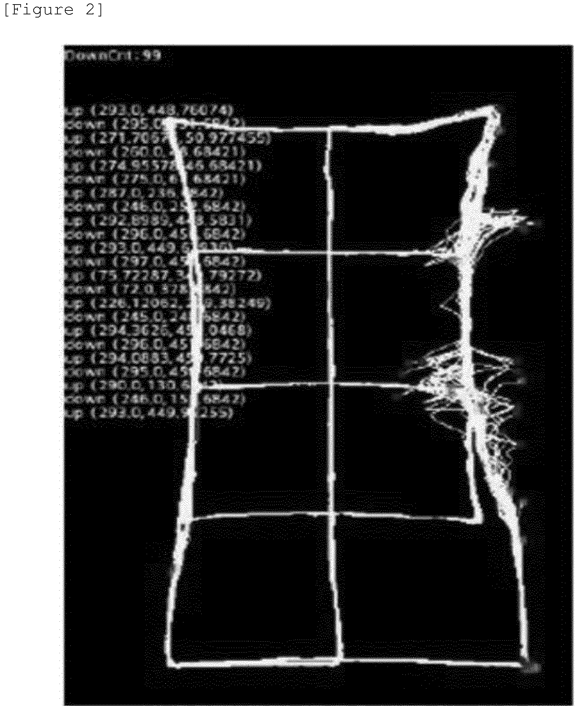

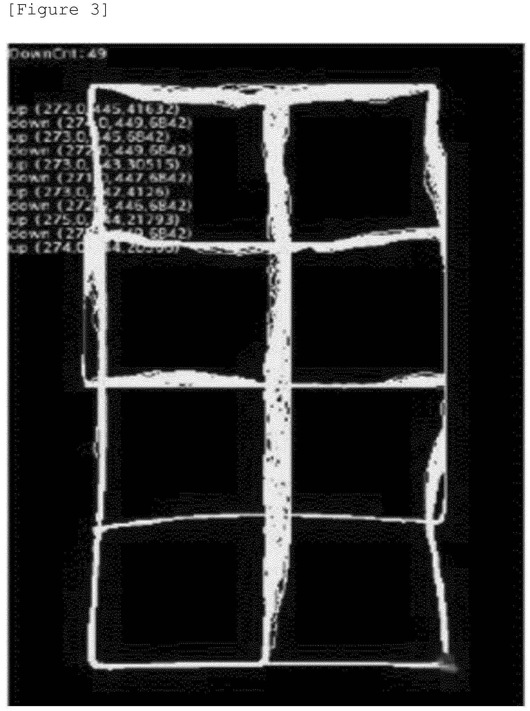

A result of the electric field driving characteristic of the touch of the rear surface of the touch screen according to the exemplary embodiment of the present application is schematically illustrated in FIGS. 2 and 3. More particularly, FIG. 2 is a diagram illustrating the result of the electric field driving characteristic of the touch of the rear surface of the touch screen when a pitch of the sensing electrode pattern is 240 µm and a pitch of the driving electrode pattern is 170 µm, and FIG. 3 is a diagram illustrating the result of the electric field driving characteristic of the touch of the rear surface of the touch screen when a pitch of the sensing electrode pattern is 240 µm and a pitch of the driving electrode pattern is 130 µm.

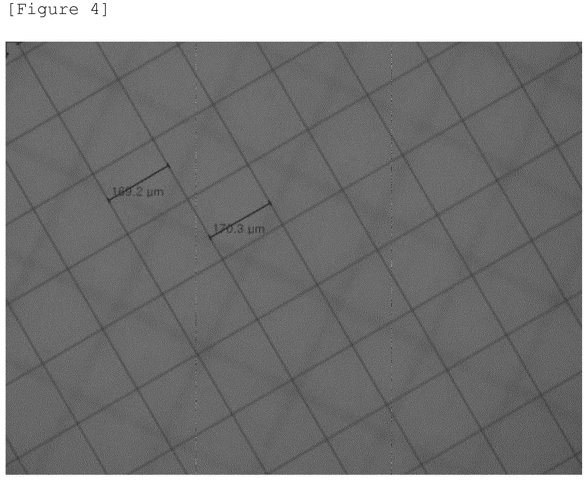

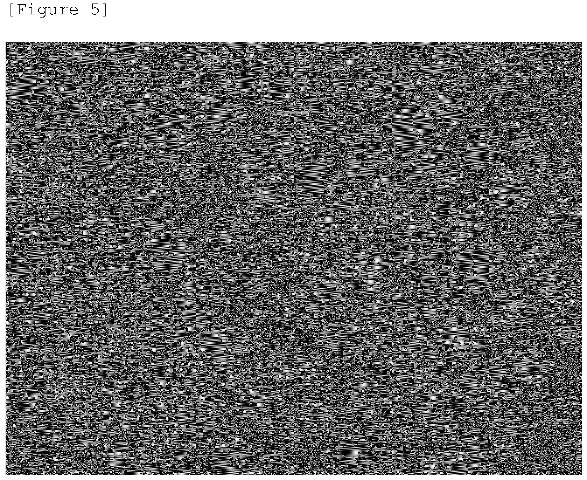

Further, the forms of the driving electrode pattern and the sensing electrode pattern of the touch screen according to the exemplary embodiment of the present application are schematically illustrated in FIGS. 4 and 5. More particularly, FIG. 4 is a diagram illustrating the forms of the driving electrode pattern and the sensing electrode pattern when a pitch of the sensing electrode pattern is 240 µm and a pitch of the driving electrode pattern is 170 µm, and FIG. 5 is a diagram illustrating the forms of the driving electrode pattern and the sensing electrode pattern when a pitch of the sensing electrode pattern is 240 µm and a pitch of the driving electrode pattern is 130 µm.

As represented in the result, according to the exemplary embodiment of the present application, when the driving electrode pattern and the sensing electrode pattern of the touch screen include the conductive metal line, it is possible to decrease touch sensing of the lower surface of the driving electrode unit, in which the driving electrode pattern is provided, that is, the rear surface of the touch screen, by adjusting the pitches of the driving electrode pattern and the sensing electrode pattern. Accordingly, it is possible to solve a problem in that a malfunction is generated due to noise or a contact by pressure from the rear surface of the touch screen.

## Claims

1. A touch screen, comprising:
a driving electrode unit including a driving electrode pattern (Tx pattern) provided on a first substrate; and
a sensing electrode unit including a sensing electrode pattern (Rx pattern) provided on a second substrate,
wherein the driving electrode pattern and the sensing electrode pattern include a conductive metal line, and
a pitch of the driving electrode pattern is smaller than a pitch of the sensing electrode pattern.

2. The touch screen of claim 1, wherein the pitch of the sensing electrode pattern is 100 to 400 µm.

3. The touch screen of claim 1, wherein the pitch of the driving electrode pattern is 100 to 400 µm.

4. The touch screen of claim 1, wherein a variation of charges per unit area of the sensing electrode unit for touch sensing of a lower surface of the driving electrode unit is 40% or less.

5. The touch screen of claim 1, wherein a variation of charges per unit area of the sensing electrode unit for touch sensing of a lower surface of the driving electrode unit is 20% or less.

6. The touch screen of claim 1, further comprising:
an optically clear adhesive (OCA) film between the driving electrode unit and the sensing electrode unit.

7. The touch screen of claim 1, wherein each of the driving electrode pattern and the sensing electrode pattern independently includes one or more selected from the group consisting of a metal, a metal oxide, a metal nitride, a metal oxynitride, and a metal alloy.

8. The touch screen of claim 1, wherein a line width of each of the driving electrode pattern and the sensing electrode pattern independently is 10 µm or less.

9. The touch screen of claim 1, further comprising:
a darkening layer provided at least one surface of the driving electrode pattern or the sensing electrode pattern.

10. A display device comprising the touch screen of any one of claims 1 to 9.
